# EUROPEAN PATENT APPLICATION

(11) **EP 3 293 723 A1**
(43) Date of publication of application: **14.03.2018**
(21) Application number: 17190239.8
(22) Date of filing: 08.09.2017
(51) Int. Cl.: G09G 3/00, G02B 27/00, G02B 27/01

(54) **METHOD, STORAGE MEDIUM, AND ELECTRONIC DEVICE FOR DISPLAYING IMAGES**

(30) Priority: 09.09.2016 KR 20160116594
(71) Applicant: Samsung Electronics Co., Ltd., Gyeonggi-do 16677 (KR)
(72) Inventor: Heo, Yoon-Jeong, 16677 Suwon-si (KR); Song, In-Sun, 16677 Suwon-si (KR); Kim, Min-Jung, 16677 Suwon-si (KR); Park, Ji-Yoon, 16677 Suwon-si (KR)
(74) Representative: Nederlandsch Octrooibureau

(57) **Abstract**

An electronic device, a method of displaying an image by the electronic device, and a non-transitory computer-readable storage medium are provided. The electronic device includes a display and a processor functionally connected to the display, wherein the processor is configured to display a first region of a three-dimensional (3D) space according to a first rendering scheme, when a preset condition is met, determine a region of interest and a region of no interest, display the region of interest on the display according to the first rendering scheme, and display the region of no interest on the display according to a second rendering scheme.

## Description

### Field of the Invention

The present disclosure relates generally to electronic devices and methods for displaying images, and more particularly, to electronic devices and methods for updating images according to a motion of a user's head and/or eyes.

### Background to the Invention

Electronic devices include devices wearable on a person's body, and are typically called wearable devices. Head mounted displays (HMDs) are among such wearable electronic devices.

An HMD is worn on a part of a user's body (e.g., the head), providing the user with a virtual reality (VR) environment. The VR environment may include, e.g., various user interfaces that may display screens to implement VR or may implement VR.

Conventional HMDs may sense an acceleration, an angular acceleration, or a direction of a tilt and display a screen corresponding to the sensed information. Accordingly, an HMD may change and display screens corresponding to a user's motion. The user may receive a realistic service by viewing the changed screens.

For example, an HMD may render an image updated by reflecting the user's motion grasped through a head tracking technique. If the image update is delayed when the direction of the user's view (e.g., line of sight) is changed, cognitive dissonance may cause motion sickness. As the user moves his/her line of sight more quickly, the screen may be broken and lagged. Such responsiveness issues may be more serious for mobile device-based VR (e.g., Gear VR™).

Accordingly, a need exists for a method of updating images according to a motion of a user's head and/or eyes.

### Summary of the Invention

An aspect of the present disclosure provides a method of updating images according to a motion of a user's head and/or eyes.

In accordance with an aspect of the present disclosure, an electronic device is provided. The electronic device includes a display and a processor functionally connected to the display, wherein the processor is configured to display a first region of a three-dimensional (3D) space according to a first rendering scheme, when a preset condition is met, determine a region of interest and a region of no interest, display the region of interest on the display according to the first rendering scheme, and display the region of no interest on the display according to a second rendering scheme.

In accordance with another aspect of the present disclosure, a method of displaying an image by an electronic device is provided. The method includes displaying, on a display, a first region of a 3D space according to a first rendering scheme, when a preset condition is met, determining, by a processor, a region of interest and a region of no interest, displaying, on the display, the region of interest according to the first rendering scheme, and displaying the region of no interest according to a second rendering scheme.

In accordance with another aspect of the present disclosure, a non-transitory computer-readable storage medium storing commands is provided, wherein the commands are configured to be executed by at least one processor to enable the at least one processor to perform at least one operation. The at least one operation includes displaying a first region of a three-dimensional (3D) space according to a first rendering scheme; when a preset condition is met, determining a region of interest and a region of no interest; and displaying the region of interest according to the first rendering scheme and the region of no interest according to a second rendering scheme.

### Brief Description of the Drawings

The above and other aspects, features, and advantages of the present disclosure will be more apparent from the following detailed description, taken in conjunction with the accompanying drawings, in which:
FIG. 1 is a block diagram of an electronic device in a network environment according to an embodiment of the present disclosure;
FIG. 2 is a block diagram of an electronic device according to an embodiment of the present disclosure;
FIG. 3 is a block diagram of a program module according to an embodiment of the present disclosure;
FIG. 4A is an illustration of electronic devices according to an embodiment of the present disclosure;
FIG. 4B is a perspective view of a user wearing an HMD VR device according to an embodiment of the present disclosure;
FIG. 4C is an illustration of a display of an electronic device according to an embodiment of the present disclosure;
FIG. 5 is a flowchart of a method of displaying an image by an electronic device according to an embodiment of the present disclosure;
FIG. 6A is an illustration of a 3D space according to an embodiment of the present disclosure;
FIGs. 6B, 6C, 6D, and 6E are illustrations of screen updates in an electronic device according to various embodiments of the present disclosure;
FIGs. 7A and 7B are illustrations of screen updates in an electronic device according to various embodiments of the present disclosure;
FIGs. 8A and 8B are illustrations of a method of displaying an image by an electronic device according to an embodiment of the present disclosure;
FIGs. 9A and 9B are illustrations of a method of displaying an image by an electronic device according to an embodiment of the present disclosure;
FIGs. 10A, 10B, and 10C are illustrations of a method of setting a region of interest according to an embodiment of the present disclosure;
FIGs. 11A, 11B, and 11C are illustrations of a method of setting a region of interest according to an embodiment of the present disclosure;
FIG. 12 is an illustration of a method of setting a region of interest according to an embodiment of the present disclosure;
FIG. 13 is a flowchart of a method of displaying an image by an electronic device according to an embodiment of the present disclosure;
FIG. 14 is an illustration of a method of displaying an image by an electronic device according to an embodiment of the present disclosure; and
FIG. 15 is a flowchart of a method of displaying an image by an electronic device according to an embodiment of the present disclosure.

### Description of Embodiments of the Invention

Hereinafter, embodiments of the present disclosure are described with reference to the accompanying drawings. However, it should be appreciated that the present disclosure is not limited to the embodiments and the terminology used herein, and all changes and/or equivalents or replacements thereto are intended to be within the scope of the present disclosure as defined by the appended claims and their equivalents. The same or similar reference numerals may be used to refer to the same or similar elements throughout the present disclosure and the accompanying drawings.

It is to be understood that the singular forms "a," "an," and "the" include plural references unless the context clearly dictates otherwise. As used herein, the terms "A or B," "A/B" and "at least one of A and/or B" may include all possible combinations of A and B. As used herein, the terms "first" and "second" may modify various components regardless of importance and/or order and are used to distinguish a component from another component without limiting the components. It will be understood that when an element (e.g., a first element) is referred to as being (operatively or communicatively) "coupled with/to," or "connected with/to" another element (e.g., a second element), the element can be coupled or connected with/to the other element directly or via a third element. The term "plurality" may indicate at least two or more.

As used herein, the term "configured to" may be interchangeably used with other terms, such as "suitable for," "capable of," "modified to," "made to," "adapted to," "able to," and "designed to" in hardware or software in the context. The term "configured to" may indicate that a device can perform an operation together with another device or parts. For example, the term "processor configured (or set) to perform A, B, and C" may indicate a general-purpose processor (e.g., a central processing unit (CPU) or application processor (AP)) that may perform the operations by executing one or more software programs stored in a memory device or a dedicated processor (e.g., an embedded processor) for performing the operations.

For example, an electronic device according to an embodiment of the present disclosure may include at least one of a smartphone, a tablet personal computer (PC), a mobile phone, a video phone, an electronic book (e-book) reader, a desktop PC, a laptop computer, a netbook computer, a workstation, a server, a personal digital assistant (PDA), a portable multimedia player (PMP), a moving picture experts group audio layer 3 (MP3) player, a medical device, a camera, and a wearable device. The wearable device may include at least one of an accessory-type device (e.g., a watch, a ring, a bracelet, an anklet, a necklace, glasses, contact lenses, and an HMD), a fabric- or clothes-integrated device (e.g., electronic clothes), a body attaching-type device (e.g., a skin pad or tattoo), and a body implantable device. In an embodiment of the present disclosure, examples of the smart home appliance may include at least one of a television, a digital video disk (DVD) player, an audio player, a refrigerator, an air conditioner, a cleaner, an oven, a microwave oven, a washer, a dryer, an air cleaner, a set-top box, a home automation control panel, a security control panel, a TV box (e.g., Samsung HomeSync®, Apple TV®, and Google TV™), a gaming console (Xbox®, PlayStation®), an electronic dictionary, an electronic key, a camcorder, and an electronic picture frame.

According to an embodiment of the present disclosure, the electronic device may include at least one of various medical devices (e.g., diverse portable medical measuring devices (e.g., a blood sugar measuring device, a heartbeat measuring device, and a body temperature measuring device), a magnetic resource angiography (MRA) device, a magnetic resource imaging (MRI) device, a computed tomography (CT) device, an imaging device, and an ultrasonic device), a navigation device, a global navigation satellite system (GNSS) receiver, an event data recorder (EDR), a flight data recorder (FDR), an automotive infotainment device, an electronic device for sailing (e.g., a navigation device for sailing or a gyro compass), avionics, security devices, vehicular head units, industrial or home robots, drones, automated teller machines (ATMs), point of sales (POS) devices, or Internet of Things (IoT) devices (e.g., a light bulb, various sensors, a sprinkler, a fire alarm, a thermostat, a street light, a toaster, fitness equipment, a hot water tank, a heater, and a boiler).

The electronic device may include at least one of a part of a piece of furniture, building/structure or vehicle, an electronic board, an electronic signature receiving device, a projector, and various measurement devices (e.g., devices for measuring water, electricity, gas, or electromagnetic waves). The electronic device may be flexible or may be a combination of the above-enumerated electronic devices. The electronic devices are not limited to those described above. As used herein, the term "user" may denote a human or another device (e.g., an artificial intelligence electronic device) using the electronic device.

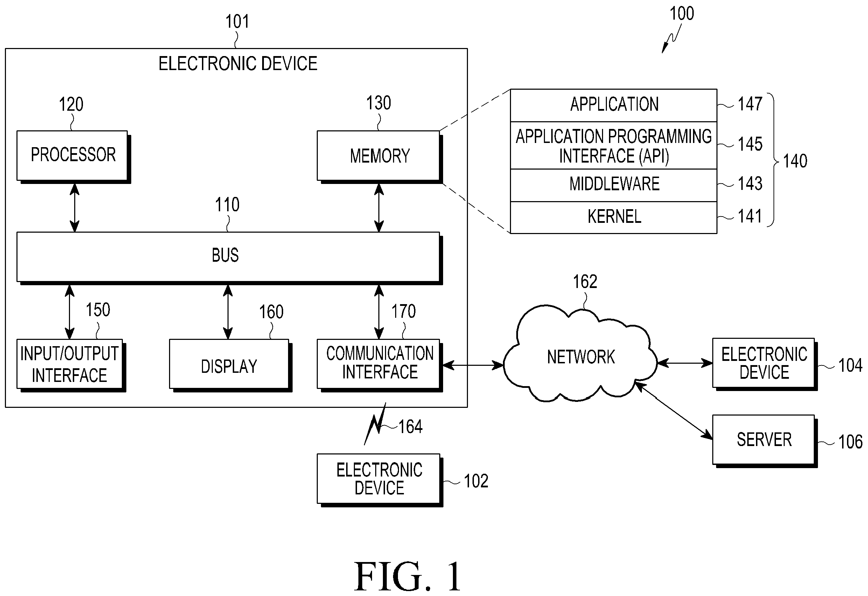

FIG. 1 is a block diagram of an electronic device 101 in a network environment 100 according to an embodiment of the present disclosure.

Referring to FIG. 1, the electronic device 101 is included in the network environment 100. The electronic device 101 may include a bus 110, a processor 120, a memory 130, an input/output interface 150, a display 160, and a communication interface 170. In an embodiment of the present disclosure, the electronic device 101 may exclude at least one of the components or may add another component. The bus 110 may include a circuit for connecting the components 110 to 170 to one another and transferring communications (e.g., control messages or data) between the components. The processor 120 may include one or more of a CPU, an AP, and a communication processor (CP). The processor 120 may control at least one of the other components of the electronic device 101, and/or perform an operation or process data relating to communication.

The memory 130 may include a volatile and/or a non-volatile memory. For example, the memory 130 may store commands or data related to at least one other component of the electronic device 101. According to an embodiment of the present disclosure, the memory 130 may store software and/or a program 140. The program 140 may include, e.g., a kernel 141, middleware 143, an application programming interface (API) 145, and/or an application program (or "application") 147. At least a portion of the kernel 141, middleware 143, or API 145 may be referred to as an operating system (OS). For example, the kernel 141 may control or manage system resources (e.g., the bus 110, the processor 120, or the memory 130) used to perform operations or functions implemented in other programs (e.g., the middleware 143, the API 145, or the application program 147). The kernel 141 may provide an interface that allows the middleware 143, the API 145, or the application program 147 to access the individual components of the electronic device 101 to control or manage the system resources.

The middleware 143 may function as a relay to allow the API 145 or the application 147 to communicate data with the kernel 141, for example. Further, the middleware 143 may process one or more task requests received from the application program 147 in order of priority. For example, the middleware 143 may assign a priority of using system resources (e.g., the bus 110, the processor 120, or the memory 130) of the electronic device 101 to at least one of the applications in the application program 147 and process one or more task requests. The API 145 is an interface allowing the application program 147 to control functions provided from the kernel 141 or the middleware 143. For example, the API 133 may include at least one interface or function (e.g., a command) for filing control, window control, image processing or text control. For example, the input/output interface 150 may transfer commands or data input from the user or another external device to other component(s) of the electronic device 101 or may output commands or data received from other component(s) of the electronic device 101 to the user or other external devices.

The display 160 may include, e.g., a liquid crystal display (LCD), a light emitting diode (LED) display, an organic light emitting diode (OLED) display, a microelectromechanical systems (MEMS) display, or an electronic paper display. The display 160 may display, e.g., various contents (e.g., text, images, videos, icons, or symbols) to the user. The display 160 may include a touchscreen and may receive, e.g., a touch, a gesture, a proximity or hovering input using an electronic pen or a part of the user's body. For example, the communication interface 170 may set up communication between the electronic device 101 and an external device (e.g., a first electronic device 102, a second electronic device 104, or a server 106). For example, the communication interface 170 may be connected to a network 162 through wireless communication or wired communication and may communicate with the second external electronic device 104 or server 106.

The wireless communication may include cellular communication which uses at least one of, e.g., long term evolution (LTE), long term evolution-advanced (LTE-A), code division multiple access (CDMA), wideband code division multiple access (WCDMA), universal mobile telecommunication system (UMTS), wireless broadband (WiBro), or global system for mobile communication (GSM). According to an embodiment of the present disclosure, the wireless communication may include at least one of, e.g., wireless fidelity (WiFi), Bluetooth (BT), Bluetooth low power (BLE), Zigbee, near field communication (NFC), magnetic secure transmission (MST), radio frequency (RF), or body area network (BAN). The wireless communication may include GNSS. The GNSS may be, e.g., global positioning system (GPS), global navigation satellite system (Glonass), Beidou navigation satellite system (Beidou), Galileo, or the European global satellite-based navigation system. Hereinafter, the terms "GPS" and the "GNSS" may be used interchangeably.

The wired connection may include at least one of, e.g., universal serial bus (USB), high definition multimedia interface (HDMI), recommended standard (RS)-232, power line communication (PLC), or plain old telephone service (POTS). The network 162 may include at least one of telecommunication networks, e.g., a computer network (e.g., local area network (LAN) or wide area network (WAN)), the Internet, or a telephone network.

The first and second external electronic devices 102 and 104 may each be a device of the same type or a different type of the electronic device 101. According to an embodiment of the present disclosure, all or some of the operations executed on the electronic device 101 may be executed on another or multiple other electronic devices (e.g., the electronic devices 102 and 104 or server 106). When the electronic device 101 performs some function or service automatically or at a request, the electronic device 101, instead of executing the function or service on its own or additionally, may request the electronic device 102, the electronic device 104, or the server 106 to perform at least some functions associated therewith. The electronic device 102, the electronic device 104, or the server 106 may execute the requested functions or additional functions and transfer the result to the electronic device 101. The electronic device 101 may provide a requested function or service by processing the received result as is or may additionally process the result. To that end, a cloud computing, distributed computing, or client-server computing technique may be used, for example.

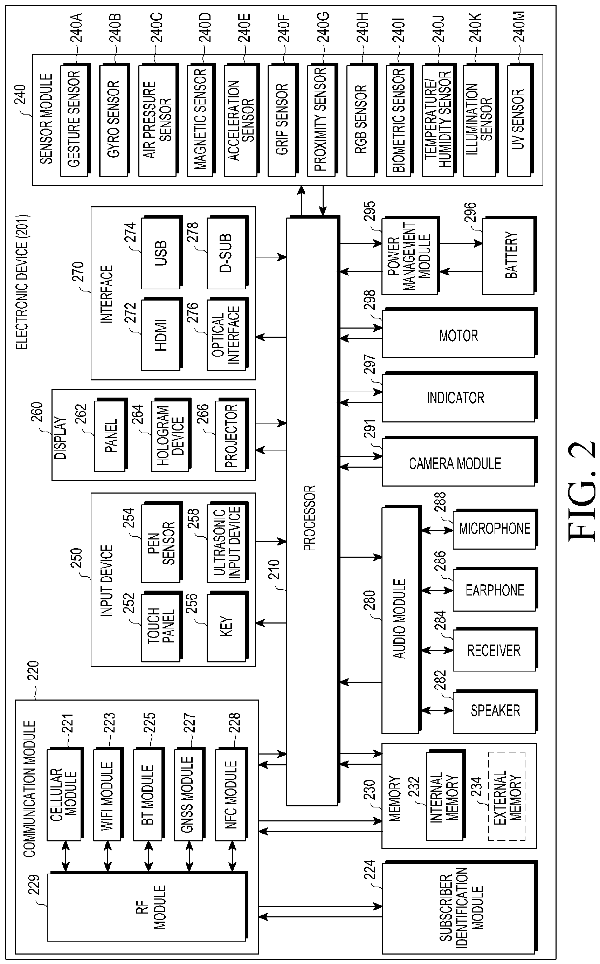

FIG. 2 is a block diagram of an electronic device 201 according to an embodiment of the present disclosure.

Referring to FIG. 2, the electronic device 201 may include the whole or part of the configuration of, e.g., the electronic device 101 shown in FIG. 1. The electronic device 201 may include one or more processors (e.g., APs) 210, a communication module 220, a subscriber identification module (SIM) 224, a memory 230, a sensor module 240, an input device 250, a display 260, an optical interface 270, an audio module 280, a camera module 291, a power management module 295, a battery 296, an indicator 297, and a motor 298. The processor 210 may control multiple hardware and software components connected to the processor 210 by running, e.g., an OS or application programs, and the processor 210 may process and compute various data. The processor 210 may be implemented in, e.g., a system on chip (SoC). According to an embodiment of the present disclosure, the processor 210 may further include a graphics processing unit (GPU) and/or an image signal processor. The processor 210 may include at least some (e.g., a cellular module 221) of the components shown in FIG. 2. The processor 210 may load a command or data received from at least one of the other components (e.g., a non-volatile memory) onto a volatile memory, process the command or data, and store resultant data in the non-volatile memory.

The communication module 220 (e.g., the communication interface 170 of FIG. 1) may include, e.g., the cellular module 221, a WiFi module 223, a BT module 225, a GNSS module 227, a NFC module 228, and an RF module 229. The cellular module 221 may provide voice call, video call, text, or Internet services through, e.g., a communication network. The cellular module 221 may perform identification or authentication on the electronic device 201 in the communication network using the SIM 224 (e.g., a SIM card). According to an embodiment of the present disclosure, the cellular module 221 may perform at least some of the functions providable by the processor 210. The cellular module 221 may include a CP. At least some (e.g., two or more) of the cellular module 221, the WiFi module 223, the BT module 225, the GNSS module 227, or the NFC module 228 may be included in a single integrated circuit (IC) or an IC package. The RF module 229 may communicate data, e.g., communication signals (e.g., RF signals). The RF module 229 may include, e.g., a transceiver, a power amplifier module (PAM), a frequency filter, a low noise amplifier (LNA), or an antenna. At least one of the cellular module 221, the WiFi module 223, the BT module 225, the GNSS module 227, and the NFC module 228 may communicate RF signals through a separate RF module. The SIM 224 may include a SIM card or an embedded SIM, and may contain unique identification information (e.g., an integrated circuit card identifier (ICCID) or subscriber information (e.g., an international mobile subscriber identity (IMSI)).

The memory 230 may include, e.g., an internal memory 232 or an external memory 234. The internal memory 232 may include at least one of, e.g., a volatile memory (e.g., a dynamic random access memory (DRAM), a static RAM (SRAM), a synchronous dynamic RAM (SDRAM), etc.) or a non-volatile memory (e.g., a one-time programmable read only memory (OTPROM), a programmable ROM (PROM), an erasable and programmable ROM (EPROM), an electrically erasable and programmable ROM (EEPROM), a mask ROM, a flash ROM, a flash memory (e.g., a NAND flash, or a NOR flash), a hard drive, or a solid state drive (SSD). The external memory 234 may include a flash drive, e.g., a compact flash (CF) memory, a secure digital (SD) memory, a micro-SD memory, a mini-SD memory, an extreme digital (xD) memory, a multi-media card (MMC), or a memory stick™. The external memory 234 may be functionally or physically connected to the electronic device 201 via various interfaces.

For example, the sensor module 240 may measure a physical quantity or detect an operational state of the electronic device 201, and the sensor module 240 may convert the measured or detected information into an electrical signal. The sensor module 240 may include at least one of, e.g., a gesture sensor 240A, a gyro sensor 240B, an air pressure sensor 240C, a magnetic sensor 240D, an acceleration sensor 240E, a grip sensor 240F, a proximity sensor 240G, a color sensor 240H (e.g., a red-green-blue (RGB) sensor), a biometric sensor 240I, a temperature/humidity sensor 240J, an illumination sensor 240K, or an ultraviolet (UV) light sensor 240M. Additionally or alternatively, the sensing module 240 may include, e.g., an electronic nose (e-nose) sensor, an electromyography (EMG) sensor, an electroencephalogram (EEG) sensor, an electrocardiogram (ECG) sensor, an infrared (IR) sensor, an iris sensor, or a fingerprint sensor. The sensor module 240 may further include a control circuit for controlling at least one or more of the sensors included in the sensor module 240. According to an embodiment of the present disclosure, the electronic device 201 may further include a processor configured to control the sensor module 240 as part of the processor 210 or separately from the processor 210, and the electronic device 201 may control the sensor module 240 while the processor 210 is in a reduced power or sleep mode.

The input device 250 may include, e.g., a touch panel 252, a (digital) pen sensor 254, a key 256, or an ultrasonic input device 258. The touch panel 252 may use at least one of capacitive, resistive, infrared, or ultrasonic methods. The touch panel 252 may further include a control circuit. The touch panel 252 may further include a tactile layer and may provide a user with a tactile reaction. The (digital) pen sensor 254 may include, e.g., a part of a touch panel or a separate sheet for recognition. The key 256 may include, e.g., a physical button, an optical key or a key pad. The ultrasonic input device 258 may sense an ultrasonic wave generated from an input tool through a microphone 288 to identify data corresponding to the sensed ultrasonic wave.

The display 260 may include a panel 262, a hologram device 264, a projector 266, and/or a control circuit for controlling the same. The panel 262 may be implemented to be flexible, transparent, or wearable. The panel 262, together with the touch panel 252, may be configured in one or more modules. According to an embodiment of the present disclosure, the panel 262 may include a pressure sensor (or force sensor) that may measure the strength of a pressure by the user's touch. The pressure sensor may be implemented in a single body with the touch panel 252 or may be implemented in one or more sensors separate from the touch panel 252. The hologram device 264 may project 3D images (holograms) in the air by using light interference. The projector 266 may display an image by projecting light onto a screen. The screen may be, for example, located inside or outside of the electronic device 201. The optical interface 270 may include e.g., an HDMI 272, a USB 274, an optical interface 276, or a D-subminiature (D-sub) connector 278. The optical interface 270 may be included in, e.g., the communication interface 170 shown in FIG. 1. Additionally or alternatively, the optical interface 270 may include a mobile high-definition link (MHL) interface, an SD memory card/ MMC interface, or an Infrared Data Association (IrDA) standard interface.

The audio module 280 may convert, e.g., a sound signal into an electrical signal and vice versa. At least a part of the audio module 280 may be included in, e.g., the input/output interface 150 as shown in FIG. 1. The audio module 280 may process sound information input or output through e.g., a speaker 282, a receiver 284, an earphone 286, or the microphone 288. For example, the camera module 291 may be a device for capturing still images and videos, and may include, according to an embodiment of the present disclosure, one or more image sensors (e.g., front and back sensors), a lens, an image signal processor (ISP), or a flash such as an LED or xenon lamp. The power management module 295 may manage power of the electronic device 201, for example. The power management module 295 may include a power management integrated circuit (PMIC), a charger IC, or a battery gauge. The PMIC may have a wired and/or wireless recharging scheme. The wireless charging scheme may include, e.g., a magnetic resonance scheme, a magnetic induction scheme, or an electromagnetic wave based scheme, and an additional circuit, such as a coil loop, a resonance circuit, a rectifier, or the like may be added for wireless charging. The battery gauge may measure an amount of power remaining in the battery 296, a voltage, a current, or a temperature while the battery 296 is being charged. The battery 296 may include, e.g., a rechargeable battery or a solar battery.

The indicator 297 may indicate a particular state of the electronic device 201 or a part (e.g., the processor 210) of the electronic device 201, including e.g., a booting state, a message state, or a recharging state. The motor 298 may convert an electrical signal to a mechanical vibration and may generate a vibrational or haptic effect. The electronic device 201 may include a mobile TV supporting device (e.g., a GPU) that may process media data as per, e.g., digital multimedia broadcasting (DMB), digital video broadcasting (DVB), or mediaFlo™ standards. Each of the aforementioned components of the electronic device 201 may include one or more parts, and a name of the part may vary with a type of the electronic device 201. According to various embodiments of the present disclosure, the electronic device 201 may exclude some elements, include additional elements, or some of the elements may be combined into a single entity that may perform the same function as the elements prior to being combined.

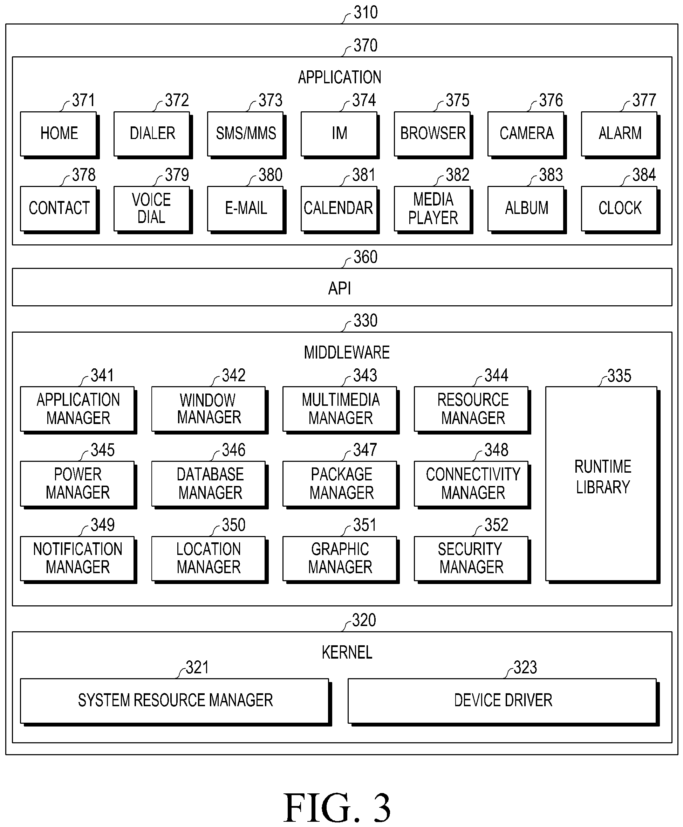

FIG. 3 is a block diagram of a program module 310 according to an embodiment of the present disclosure.

Referring to FIG. 3, the program module 310 may include an OS controlling resources related to an electronic device 101 and/or various applications 147) driven on the OS. The OS may include, e.g., Android®, iOS®, Windows®, Symbian®, Tizen®, or Bada™. The program module 310 may include a kernel 320, middleware 330, an API 360, and/or an application 370. At least a part of the program module 310 may be preloaded on the electronic device or may be downloaded from the electronic device 102, the electronic device 104, or the server 106.

The kernel 320 may include, e.g., a system resource manager 321 or a device driver 323. The system resource manager 321 may perform control, allocation, or recovery of system resources. According to an embodiment of the present disclosure, the system resource manager 321 may include a process managing unit, a memory managing unit, or a file system managing unit. The device driver 323 may include, e.g., a display driver, a camera driver, a BT driver, a shared memory driver, a USB driver, a keypad driver, a WiFi driver, an audio driver, or an inter-process communication (IPC) driver. The middleware 330 may provide various functions to the application 370 through the API 360 so that the application 370 may use limited system resources in the electronic device or provide functions jointly required by the application 370. The middleware 330 may include at least one of a runtime library 335, an application manager 341, a window manager 342, a multimedia manager 343, a resource manager 344, a power manager 345, a database manager 346, a package manager 347, a connectivity manager 348, a notification manager 349, a location manager 350, a graphic manager 351, or a security manager 352.

The runtime library 335 may include a library module used by a compiler in order to add a new function through a programming language while, e.g., the application 370 is being executed. The runtime library 335 may perform input/output management, memory management, or arithmetic function processing. The application manager 341 may manage the life cycle of, e.g., the application 370. The window manager 342 may manage graphical user interface (GUI) resources used on a screen. The multimedia manager 343 may grasp formats necessary to play media files and use a codec appropriate for a format to perform encoding or decoding on media files. The resource manager 344 may manage source code or memory space of the application 370. The power manager 345 may manage, e.g., the battery capability or power and provide power information necessary for the operation of the electronic device. According to an embodiment of the present disclosure, the power manager 345 may operate with a basic input/output system (BIOS). The database manager 346 may generate, search, or vary a database to be used in the application 370. The package manager 347 may manage an installation or an update of an application that is distributed in the form of a package file.

The connectivity manager 348 may manage, e.g., wireless connectivity. The notification manager 349 may provide an event, e.g., an arrival message, an appointment, or a proximity alert, to a user. The location manager 350 may manage, e.g., locational information on the electronic device. The graphic manager 351 may manage, e.g., graphical effects to be offered to a user and their related user interface. The security manager 352 may provide system security or user authentication, for example. According to an embodiment of the present disclosure, the middleware 330 may include a telephony manager for managing a voice or a video call function of the electronic device or a middleware module able to form a combination of the functions of the above-described elements. The middleware 330 may provide a module according to the type of the OS. The middleware 330 may dynamically omit some existing components or add new components. The API 360 may be a set of, e.g., API programming functions and may have different configurations depending on OSs. For example, in the case of Android® or iOS®, one API set may be provided per platform, and in the case of Tizen®, two or more API sets may be offered per platform.

The application 370 may include an application that may provide, e.g., a home application 371, a dialer application 372, short message service/multimedia messaging service (SMS/MMS) 373 application, an instant messaging (IM) application 374, a browser application 375, a camera application 376, an alarm application 377, a contact application 378, a voice dial application 379, an email application 380, a calendar application 381, a media player application 382, an album application 383, a clock application 384, a health-care application (e.g., measuring the degree of workout or blood sugar), or an environmental information application (e.g., air pressure, moisture, or temperature information). According to an embodiment of the present disclosure, the application 370 may include an information exchanging application supporting information exchange between the electronic device and an external electronic device. Examples of the information exchanging application may include, but is not limited to, a notification relay application for transferring certain information to an external electronic device, or a device management application for managing an external electronic device. For example, the notification relay application may transfer notification information generated by another application of the electronic device to an external electronic device or receive notification information from an external electronic device and provide the received notification information to a user. For example, the device management application may install, delete, or update a function (e.g., turn-on/turn-off an external electronic device (or some elements) or adjust the brightness (or resolution) of the display) of an external electronic device communicating with the electronic device or an application operating on an external electronic device. According to an embodiment of the present disclosure, the application 370 may include an application (e.g., a health-care application of a mobile medical device) designated according to an attribute of the external electronic device. The application 370 may include an application received from an external electronic device. At least a portion of the program module 310 may be implemented (e.g., executed) in software, firmware, hardware (e.g., the processor 210), or a combination of at least two or more thereof and may include a module, program, routine, command set, or process for performing one or more functions.

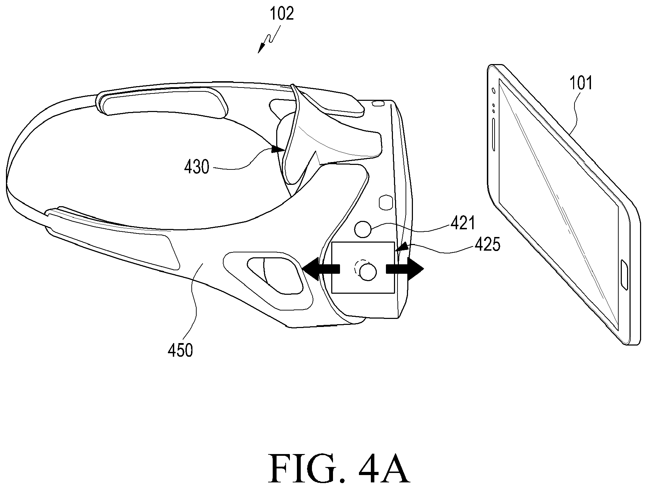

FIG. 4A is an illustration of an electronic device 101 and an electronic device 102 according to an embodiment of the present disclosure.

Referring to FIG. 4A, the electronic device 101 may store a 3D application (or a VR application) and a 3D graphic library. The 3D application may be an application capable of providing a user with a screen that looks realistic. According to an embodiment of the present disclosure, VR may indicate a virtual space where a user may turn and look around from the center of the user (or, a starting point or camera). For example, a VR may be one obtained by rendering a virtual space, which may represent 360 degrees, on a screen, such as a 360-degree video, 360-degree image content, or a 3D graphic modeling space.

According to an embodiment of the present disclosure, the 3D application may display an image for a left eye and an image for a right eye, respectively, corresponding to the left and right eyes of a user based on a stereo scheme.

The electronic device 102 may be an HMD device. The HMD device may be worn on the user's head to be fastened to the user's head despite the user's motion. The electronic device 101 may be connected to the electronic device 102. The user may wear the electronic device 102 connected to the electronic device 101, viewing the image for a left eye and viewing the image for a right eye displayed on the display of the electronic device 101.

According to an embodiment of the present disclosure, the second electronic device 102 may include a housing 450 provided to be worn on the user's head, a dark change portion 430 provided at a region corresponding to the user's eyes, and at least one input button 421 provided at a region of the housing 450. Further, the electronic device 102 may include an input pad 425 through which an input (e.g., a swipe input) may be received from the user.

The user may bring the user's eyes in tight contact with the dark change portion 430, allowing the user to observe an image by the 3D application provided from the electronic device 101 without interference by external light.

The electronic device 101 may be connected to the electronic device 102. The electronic device 101 may be wiredly/wirelessly connected to the electronic device 102. For example, the electronic device 101 may be connected to the electronic device 102 based on a USB, but this is merely an example. It will be appreciated by one of ordinary skill in the art that any other connections that enable data communication between the electronic devices 101 and 102 may be used without limitation.

According to an embodiment of the present disclosure, the electronic device 101 and the electronic device 102 may be integrated into a single HMD VR device.

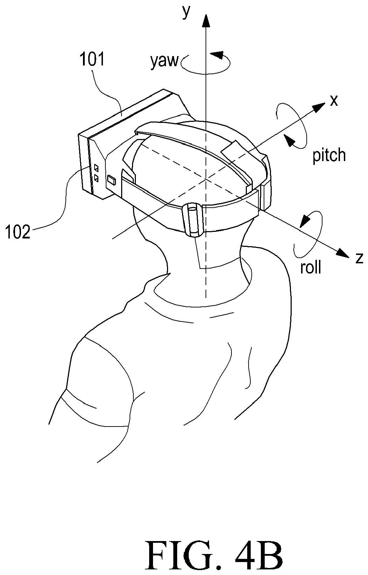

FIG. 4B is a perspective view of a user wearing an HMD VR device according to an embodiment of the present disclosure.

Referring to FIG. 4B, the user may put the housing of the electronic device 102 on his head. Further, the electronic device 101 may be coupled to the electronic device 102, and the user may view images displayed on the display of the electronic device 101.

The electronic device 101 may display an image for a left eye and an image for a right eye on the left and right portions, respectively, of the display. The image for the left eye may be incident on the user's left eye, and the image for the right eye may be incident on the user's right eye. For example, the image for the left eye and the image for the right eye may both be incident on each of the user's eyes. The user may receive a VR service by observing the images incident onto his eyes.

The 3D application executed on the electronic device 101 may allow for display of an image for both eyes on the display. Further, the 3D application may vary and display the image for both eyes according to a motion (e.g., yaw, pitch, or roll) of the user or the electronic device 101 or 102.

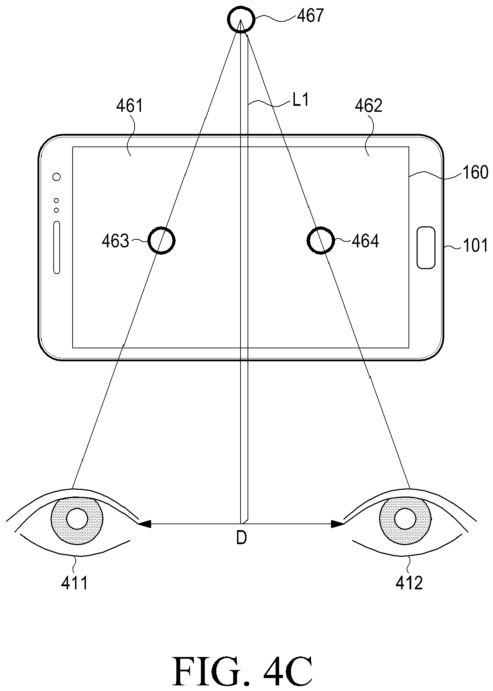

FIG. 4C is an illustration of a display of an electronic device according to an embodiment of the present disclosure.

Referring to FIG. 4C, the electronic device 101 may display an image 461 for a left eye and an image 462 for a right eye on the display 160. The image 461 for the left eye may include a first object 463, and the image 462 for the right eye may include a second object 464. In this case, the first object 463 may correspond to the left eye 411, and the second object 464 may correspond to the right eye 412. The inter-pupillary distance (IPD), which is a distance between the left eye 411 and the right eye 412, may be D. The image 461 for the left eye and the image 462 for the right eye, respectively, may correspond to the user's left and right eyes and may be images allowing the user to view images while a feeling of depth. According to an embodiment of the present disclosure, the image 461 for the left eye and the image 462 for the right-eye may be images for a VR service and may be images configured to provide a stereoscopic feeling for at least part of an overall image for a VR service. For example, the image 461 for the left eye and the image 462 for the right eye may be produced to differ to provide a feeling of depth. The user may feel a depth by observing a different image through each of his eyes.

The electronic device 101 may display the first object 463 and the second object 464 while they are spaced apart from each other at a predetermined distance. The user may determine that an object image 467 is present at a point where a straight line passing through the left eye 411 and the first object 463 crosses a straight line passing through the right eye 412 and the second object 464. For example, the user may observe the presence of the object at a point that is positioned away from the user by a distance L1.

According to an embodiment of the present disclosure, an electronic device includes a display and a processor functionally connected to the display, the processor configured to display a first region of a 3D space according to a first rendering scheme, when a preset condition is met, determine a region of interest and a region of no interest, and display the region of interest on the display according to the first rendering scheme and the region of no interest on the display according to a second rendering scheme.

According to an embodiment of the present disclosure, the 3D space may be a virtual space surrounding a user by 360 degrees, and the first region may correspond to at least a portion of a surface that limits the 3D space.

According to an embodiment of the present disclosure, the processor may be configured to determine a size of the region of interest based on information about a motion of the electronic device or a motion of a user's line of sight.

According to an embodiment of the present disclosure, portions of the region of no interest may be positioned at both sides of the region of interest.

According to an embodiment of the present disclosure, the processor may be configured to compare a value related to a motion of the electronic device or a value related to a motion of a user's line of sight with a preset threshold, and when the value related to the motion is the threshold or more, determine the region of interest and the region of no interest.

According to an embodiment of the present disclosure, the first rendering scheme may include a preset 3D rendering scheme, and the second rendering scheme may include a scheme of applying a preset visual effect.

According to an embodiment of the present disclosure, the processor may be configured to, when the preset condition is not met, display a second region of the 3D space on the display according to the first rendering scheme.

According to an embodiment of the present disclosure, the processor may be configured to determine a type of a visual effect to be applied to the region of no interest based on information about a motion of the electronic device or a motion of a user's line of sight.

According to an embodiment of the present disclosure, the visual effect to be applied to the region of no interest may include at least one of a fill-up in a mono color, adjustment of brightness, or display of a preset image.

According to an embodiment of the present disclosure, a method of displaying an image by an electronic device includes displaying a first region of a 3D space according to a first rendering scheme, when a preset condition is met, determining a region of interest and a region of no interest, and displaying the region of interest according to the first rendering scheme and the region of no interest according to a second rendering scheme.

According to an embodiment of the present disclosure, the method further includes determining a size of the region of interest based on information about a motion of the electronic device or a motion of a user's line of sight.

According to an embodiment of the present disclosure, determining the region of interest and the region of no interest may include comparing a value related to a motion of the electronic device or a value related to a motion of a user's line of sight with a preset threshold, and when the value related to the motion is the threshold or more, determining the region of interest and the region of no interest.

According to an embodiment of the present disclosure, the method further includes, when the preset condition is not met, displaying a second region of the 3D space according to the first rendering scheme.

According to an embodiment of the present disclosure, the method further includes determining a type of a visual effect to be applied to the region of no interest based on information about a motion of the electronic device or a motion of a user's line of sight.

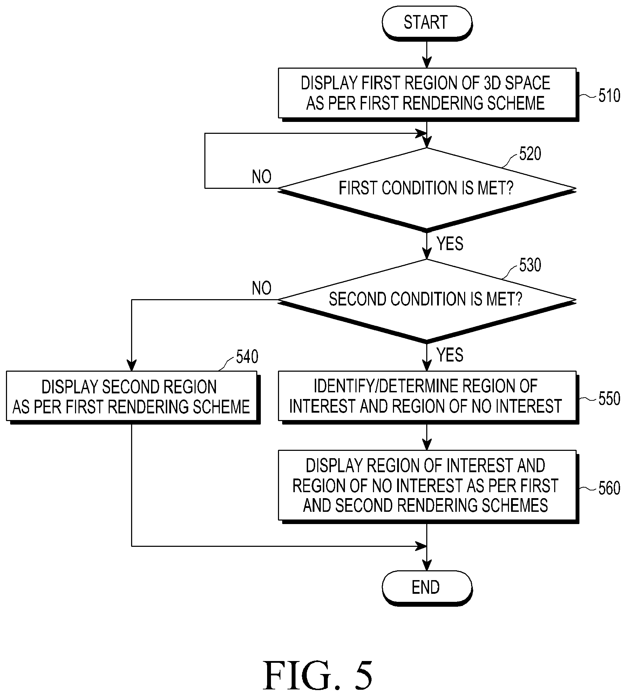

FIG. 5 is a flowchart of method of displaying an image by an electronic device according to an embodiment of the present disclosure. The image displaying method may include steps 510 to 560. The image displaying method may be performed by at least one of an electronic device, a processor of the electronic device, or a controller of the electronic device.

Referring to FIG. 5, in step 510, the electronic device may display a first region (or a first image corresponding to the first region) of a 3D space by a first rendering scheme (e.g., a 3D rendering). The electronic device may display a VR screen (or a 3D content screen) on a display. For example, a 3D rendering scheme may refer to a rendering scheme that requires a 3D graphic-related task/operation/computation, such as use of a 3D graphic library, conversion in coordinates/data between a two-dimensional (2D) coordinate system/data and a 3D coordinate system/data, or data mapping to a 3D space or 3D model. In comparison, a 2D rendering scheme may refer to a rendering scheme that does not require a 3D graphic-related task/operation/computation.

According to an embodiment of the present disclosure, the 3D space may be a virtual space surrounding a user by 360 degrees.

According to an embodiment of the present disclosure, the 3D space may be generated based on a wide-angle image/video. For example, the wide-angle image/video may include at least one of a 360-degree image/video (or a 360-degree panorama image/video) or a 2D panorama image.

According to an embodiment of the present disclosure, the 3D space may be implemented by texture-mapping the wide-angle image/video to a preset 3D model (e.g., a sphere, a cube, or a cylinder) and positioning a virtual camera corresponding to the user's view (e.g., a view port) inside the 3D model.

According to an embodiment of the present disclosure, the electronic device may display a left-eye image and a right-eye image corresponding to the first region.

In step 520, the electronic device may determine whether a preset first condition is met.

The electronic device may perform step 530 when the first condition is met and may periodically or aperiodically identify whether the first condition is met upon failure to meet the first condition. For example, the first condition may be a condition to determine whether a VR screen (or a 3D content screen) must be updated.

The first condition may be met upon detecting any one of a motion of the electronic device/user, a motion of the user's line of sight, a motion of a rendering view port (or a field of view of the virtual camera/user within the 3D space), or a user input/gesture of a preset type/pattern/text. For example, the electronic device may receive a user input that meets the first condition from an external device (e.g., the first external electronic device 102, the second external electronic device 104), or an accessory/peripheral device (e.g., a data glove worn on a hand, a joystick, or a mouse).

The electronic device may detect a motion of the electronic device, the user, or the user's line of sight using at least one sensor of an acceleration sensor 240E that senses a variation in speed, a gyro sensor 240B that senses a tilt and turn, or an eye tracker (e.g., biometric sensor 240I) that traces the user's line of sight.

For example, the eye tracker may include an IR camera and two light sources. The two light sources may generate two reflection points on the surface of the corneas of the user's eyes. The eye tracker may trace the line of sight using the center of the two reflection points and the central point of the pupils. The eye tracker may generate sampling information about the position of the line of sight of, e.g., 100*100 (width*height).

For example, the user's motion may be detected through head tracking, position tracking, or camera-based hand gesture recognition.

According to an embodiment of the present disclosure, step 520 may be omitted or may be integrated with step 530.

In step 530, the electronic device may determine whether a preset second condition is met.

The electronic device may perform step 550 when the second condition is met and perform step 540 when the second condition is not met.

The second condition may be met by any case of detecting a motion of the electronic device, detecting a motion of the user's line of sight, detecting a motion of the rendering view port (or a field of view of the virtual camera or the user's view point within the 3D space), detecting a user input/gesture of a preset type/pattern/text, when a value (e.g., a motion speed/velocity, distance of motion, level of motion, angle of slope, or velocity of tilt) related to a motion of the line of sight of the user is more/not less/less/not more than a threshold, when a value (e.g., a motion speed/velocity, distance of motion, or level of motion) related to a motion of the line of sight of the user is more/not less/less/not more than a threshold, when a state/attribute/characteristic value (e.g., a value indicating at least one of a battery status, a wireless signal receiving status, a memory status, an available resource status (e.g., a processor use status), an internal/processor temperature, and a maximum frequency of the processor (e.g., a CPU or GPU) of the electronic device is more/not less/less/not more than a preset threshold, when a state/recognition/attribute/characteristic value of an image/sound is more/not less/less/not more than a preset threshold, or when a value (e.g., a motion speed/velocity, distance of motion, or level of motion) related to a motion of the rendering view port is more/not less/less/not more than a preset threshold.

According to an embodiment of the present disclosure, when a preset event is detected/occurs or a preset period arrives, the first and/or second condition may include at least one of detection of a context associated with the electronic device that is consistent with a preset context or detection of at least one word consistent with at least one preset word.

According to an embodiment of the present disclosure, the preset context for the electronic device may include at least one of when the electronic device reaches a preset region/place, when a preset time arrives, or when the electronic device is operated according to a preset operation pattern (e.g., execution of an application(s)).

According to an embodiment of the present disclosure, the preset context for the electronic device may be determined based on information about the use history of the electronic device (e.g., the history that the electronic device executed a function/service associated with the application of different rendering schemes in a certain place/time/context).

In step 540, the electronic device may display a second region (or a third image corresponding to the second region) of the 3D space according to the first rendering scheme. The electronic device may display, on a display, an updated VR screen (or an updated 3D content screen).

According to an embodiment of the present disclosure, the electronic device may display a left-eye image and a right-eye image corresponding to the second region.

In step 550, the electronic device may identify/determine a region of interest (or a gazing region) and a region of no interest (or a non-gazing region).

For example, the electronic device may identify/determine the region of interest (or a first region) and the region of no interest (or a second region) in a to-be-displayed region (e.g., an image stored in the frame buffer or a frame buffer region) corresponding to the second region (or the user's line of sight) in the 3D space.

According to an embodiment of the present disclosure, the electronic device may determine the region of interest and/or the region of no interest based on information (e.g., a motion speed/velocity/level/distance/direction of the electronic device, user's line of sight, and/or rendering view port) about the motion of the electronic device, user's line of sight, and/or rendering view port.

According to an embodiment of the present disclosure, the region of interest and/or region of no interest may be formed along (or in parallel with) a region (e.g., an image stored in the frame buffer or a frame buffer region) to be displayed along the direction of the motion of the electronic device or the direction of the motion of the user's line of sight.

According to an embodiment of the present disclosure, portions of the region of no interest may be positioned on both sides (or at least on one side) of the region of interest.

According to an embodiment of the present disclosure, the position and/or size of the region of interest and/or region of no interest may be determined depending on the size of a value related to the motion of the electronic device, user, or rendering view port.

According to an embodiment of the present disclosure, the position and/or size of the region of interest and/or region of no interest may be determined based on the direction of the user's line of sight.

According to an embodiment of the present disclosure, the position and/or size of the region of interest and/or region of no interest may be determined based on at least one of a value (e.g., a speed of motion, a distance of motion, an angle of slope, or a velocity of tilt) related to the motion of the electronic device, a value (e.g., a motion velocity or a motion distance) related to the motion of the user's line of sight, an attribute/characteristic value of the electronic device, a recognition/attribute/characteristic value of an image/sound, a value related to the motion of the rendering view port, or a user input.

In step 560, the electronic device may display the region of interest by the first rendering scheme and the region of no interest by a second rendering scheme (e.g., applying a visual effect or 2D rendering). The electronic device may display, on the display, a second image (or an updated VR screen or an updated 3D content screen) including a portion corresponding to the region of interest which has been rendered by the first rendering scheme and a portion (or a portion of no interest) corresponding to to the region of no interest which has been rendered by the second rendering scheme.

According to an embodiment of the present disclosure, the type of the visual effects to be applied to the region of no interest may be determined based on at least one of a value (e.g., a speed/velocity of motion, a distance of motion, an angle of slope, or a velocity of tilt) related to the motion of the electronic device, a value (e.g., a motion velocity or a motion distance) related to the motion of the user's line of sight, an attribute/characteristic value (e.g., a battery level, a temperature, or an available memory capacity) of the electronic device, a recognition/attribute/characteristic value of an image/sound, a value related to the motion of the rendering view port, or a user input.

According to an embodiment of the present disclosure, the visual effect to be applied to the region of no interest may be one of fill-up in mono color, brightness adjustment, and display of a preset image.

According to an embodiment of the present disclosure, the electronic device may display a left-eye image and a right-eye image corresponding to the second region. For example, each of the left-eye image and the right-eye image may include a portion corresponding to the region of interest and a portion corresponding to the region of no interest.

According to an embodiment of the present disclosure, the electronic device may store a 3D application (or a VR application) and a 3D graphic library. For example, the 3D application may provide a 360-degree panorama view to the user.

According to an embodiment of the present disclosure, the 3D application may generate (or render) an image through 3D space/environment modeling using the 3D graphic library and output the generated image on the display through, e.g., a frame buffer. For example, the frame buffer may be included in the processor, the display (e.g., the display 160 in FIG. 1) or the memory (e.g., the memory 130 in FIG. 1) or may be provided separately therefrom. The 3D application may perform rendering by turning or moving the virtual camera (or the rendering view port) inside the 3D environment/space according to the motion of the user's head/line of sight. The 3D application may perform 3D rendering for a time shorter than a vertical synchronization period (e.g., 16.7ms at 60fps) of the display.

According to an embodiment of the present disclosure, the 3D graphic library may perform 3D rendering (and as a result, generate a 2D image) by processing a graphical command of the 3D application. For example, the 3D graphic library may include, e.g., OpenGL or Direct3D and may be performed by the CPU or GPU.

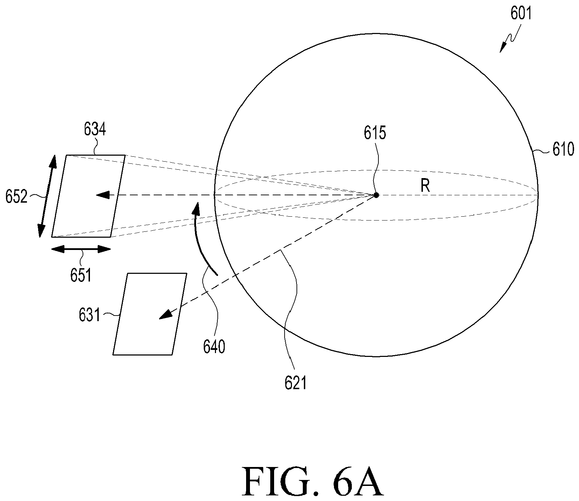

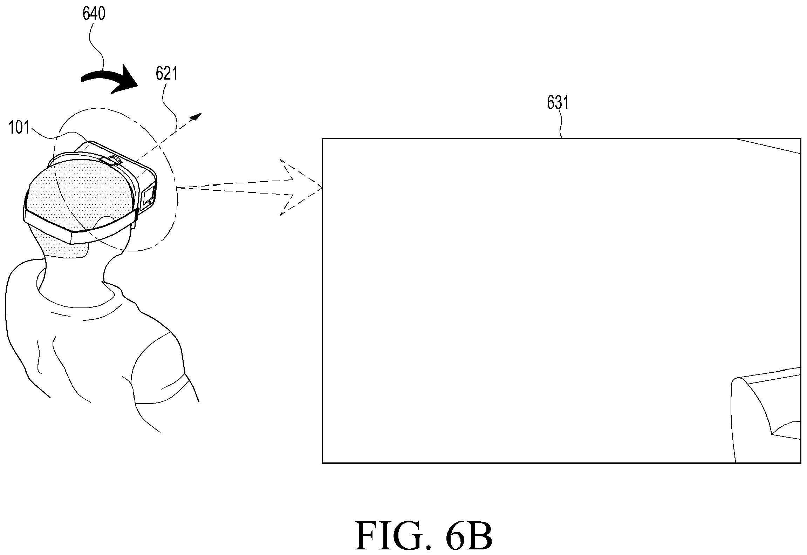

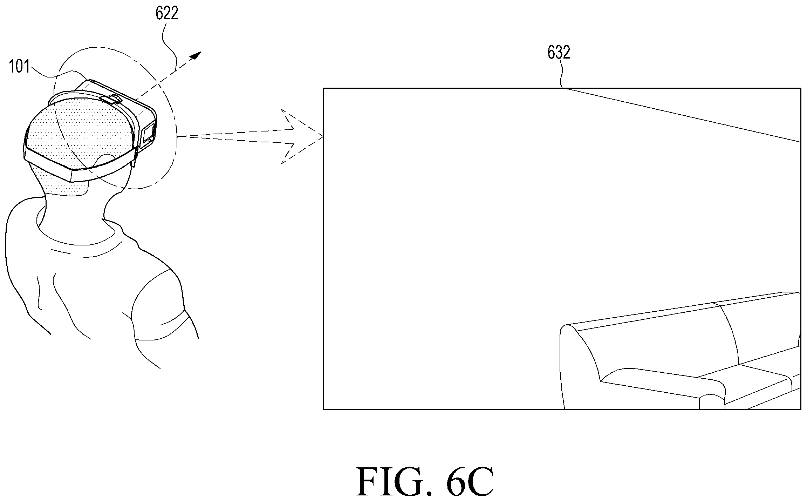

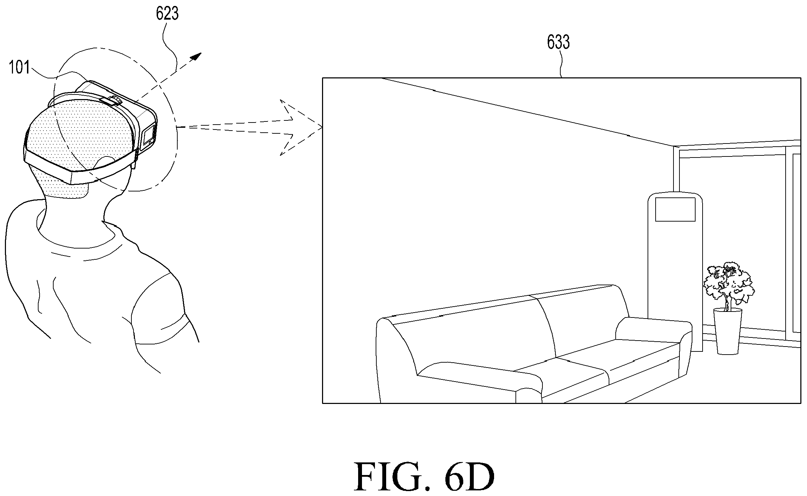

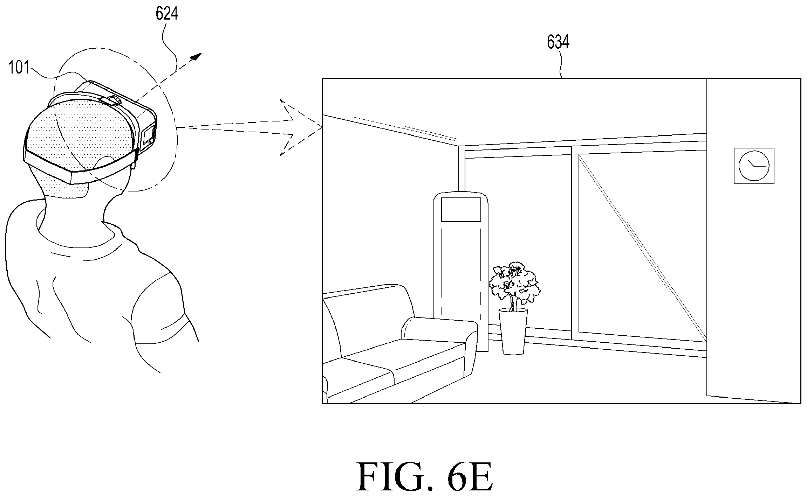

FIG. 6A is an illustration of a 3D space according to an embodiment of the present disclosure. FIGs. 6B, 6C, 6D, and 6E are illustrations of screen updates in an electronic device according to embodiments of the present disclosure.

Referring to FIG. 6A, a 3D space 601 may be implemented by at least one of an electronic device, a processor of the electronic device, or a controller of the processor.

The 3D space 601 may be implemented by texture-mapping a wide-angle image/video to a preset 3D model 610 (e.g., a sphere having a preset radius R, a cube, or a cylinder) and positioning the user's view point (or virtual camera) within (e.g., at the starting point 615) of the 3D model.

The electronic device may render a first image 631 (or a first screen) corresponding to a first region of the 3D space 601 according to a first line of sight 621 and display the same on a display.

The electronic device may render a fourth image 634 (or a fourth screen) corresponding to a fourth region of the 3D space 601 according to the motion or turn 640 of the line of sight and display the same on the display.

The camera/user's line of sight (or rendering view port or rendering region) within the 3D space 601 may be controlled by a horizontal field of view (FOV) 651 and a vertical FOV 652. The 3D application (or VR application) may set planes (e.g., right/left/top/bottom/near/far planes) limiting/defining the rendering view port, controlling the FOVs.

Referring to FIG. 6B, the user may gaze in a first direction 621 corresponding to the first line of sight of the 3D space while wearing the electronic device 101. The electronic device 101 may display an image for the left eye and an image for the right eye for the first image 631 so that the user may view the first image 631 (or a first screen). The first image 631 may be a screen corresponding to a first region of the 3D space 601 set in a VR service. In addition, the user may turn his head to the right, and the electronic device 101 may sense the motion or turn 640 of the line of sight in the right direction.

Referring to FIGs. 6B, 6C, 6D, and 6E, the user may turn his head from the first direction 621 corresponding to the first line of sight of the 3D space 601 to a second direction 622 corresponding to a second line of sight of the 3D space 601, a third direction 623 corresponding to a third line of sight of the 3D space 601, and a fourth direction 624 corresponding to a fourth line of sight of the 3D space 601. The electronic device 101 may sense the turn 640 from the first direction 621 to the fourth direction 624. The electronic device 101 may vary or update and display the screen corresponding to the turn 640. For example, the electronic device 101 may display a second image/screen 632 corresponding to the second direction 622, a third image/screen 633 corresponding to the third direction 623, and a fourth image/screen 634 corresponding to the fourth direction 624. For example, the electronic device 101 may display an image for the left eye and an image for the right eye for displaying each image/screen. Each of the first image/screen 631 to the fourth image/screen 634 may be part of the whole screen constituting a VR service. The second image/screen 632 may be an image for a foreground positioned relatively to the right of the first image/screen 631, the third image/screen 633 may be a screen for the foreground positioned relatively to the right of the second image/screen 632, and the fourth image/screen 634 may be a screen for the foreground positioned relatively to the right of the third image/screen 633. Accordingly, as the user turns his head to the right, the user may sequentially and relatively see the right-hand foregrounds.

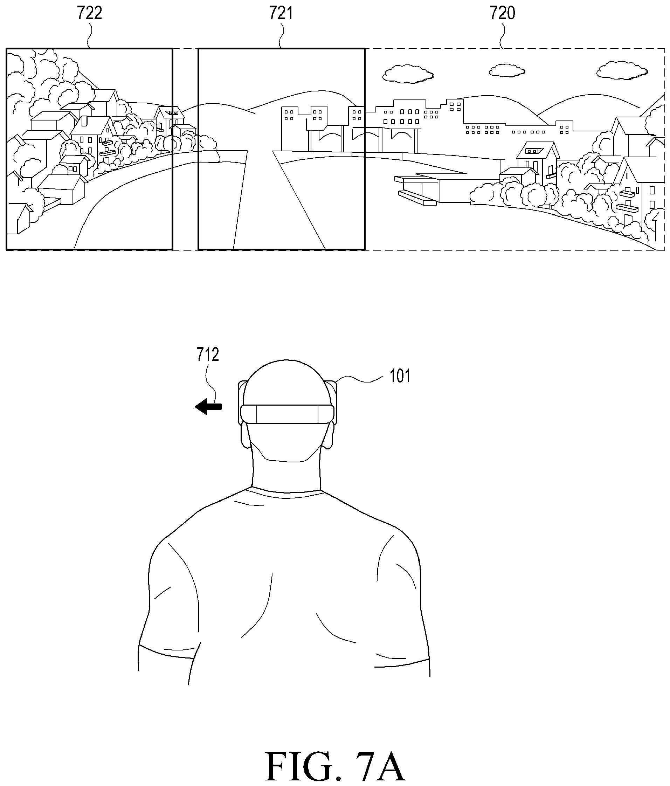

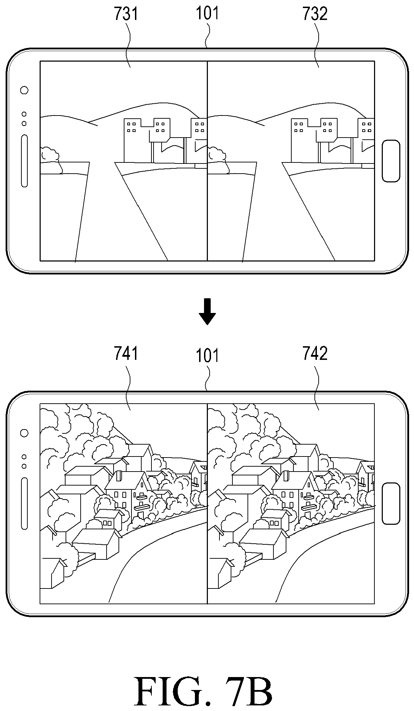

FIGs. 7A and 7B are illustrations of screen updates in an electronic device according to various embodiments of the present disclosure.

Referring to FIGs. 7A and 7B, the electronic device 101 may display, on the display, a whole image 720, such as a panorama, i.e., a first portion of a wide-angle image, or a first rendering view port 721 (or a first rendering region) corresponding thereto. For example, as shown in FIG. 7B, the electronic device 101 may display an image 731 for the left eye corresponding to the first rendering view port 721, which is a portion, on at least part of a left half of the display and an image 732 for the right eye corresponding to the first rendering view port 721 on at least part of a right half of the display. Accordingly, the user may observe the first rendering view port 721 while feeling a depth.

The user may turn his head to the left while viewing the first rendering view port 721. Thus, the electronic device 101 may sense the left turn 712. Corresponding to the sensed left turn 712, the electronic device 101 may display the image 741 for the left eye and the image 742 for the right eye corresponding to the second portion, which is positioned relatively at the left side, or its corresponding second rendering view port 722 of the whole image 720. Accordingly, the user may observe the portion corresponding to the varied line of sight as he turns his head, allowing the user to receive a realistic service.

Although FIG. 7A illustrates that the electronic device 101 displays a still image, this is merely an example.

According to an embodiment of the present disclosure, the electronic device 101 may display a video. The electronic device 101 may display a portion corresponding to the user's line of sight on each of a plurality of frames constituting the video. In other words, the electronic device 101 may store or stream a video constituted of wide-angle images, and the video may include a plurality of wide-angle images in frames.

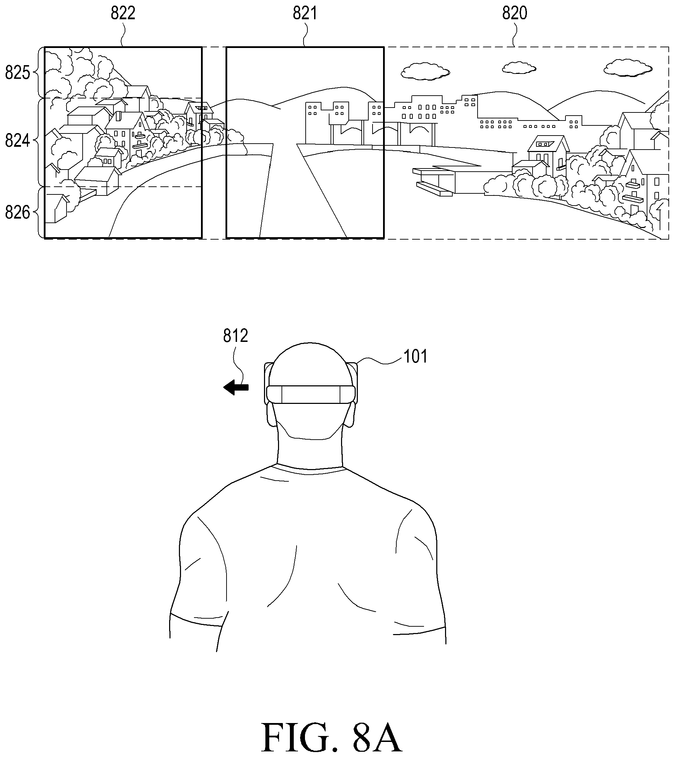

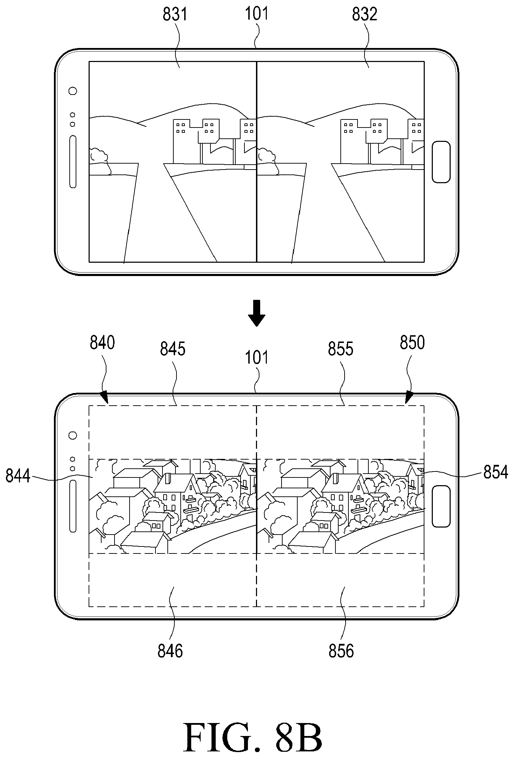

FIGs. 8A and 8B are illustrations of a method for displaying an image by an electronic device according to an embodiment of the present disclosure.

Referring to FIGs. 8A and 8B, the electronic device 101 may display, on the display by a first rendering scheme, a first portion/region or its corresponding first rendering view port 821 (or a first rendering region) of a wide-angle image 820 (e.g., a panorama image, a 3D graphic model, or VR image) mapped to (or positioned in) 3D. For example, the electronic device 101 may display an image 831 for the left eye corresponding to the first rendering view port 821 on at least part of a left half of the display and an image 832 for the right eye corresponding to the first rendering view port 821 on at least part of a right half of the display. Accordingly, the user may observe the first rendering view port 821 while feeling a depth.

The user may turn his head to the left while viewing the first rendering view port 821. Thus, the electronic device 101 may sense the left motion/turn 812.

The electronic device 101 may determine whether a preset condition is met. For example, the electronic device 101 may compare a value (e.g., a motion speed/velocity, motion distance, or motion level) related to the motion/turn 812 with a preset threshold and determine that the condition is met when the value related to the motion/turn 812 is not less than the threshold.

According to an embodiment of the present disclosure, when the condition is not met, the electronic device 101 may identify a second portion/region positioned relatively at a left side of the wide-angle image corresponding to the motion/turn 812 or its corresponding second rendering view port 822 and may display, on the display by the first rendering scheme, an image for the left eye and an image for the right eye corresponding to the second rendering view port 822.

When the condition is met, the electronic device 101 may identify/determine a region 824 of interest (or a gazing region) and regions 825 and 826 of no interest (or non-gazing regions). For example, the electronic device may identify/determine the region of interest (or a first region) and the region of no interest (or a second region) in a to-be-displayed region (e.g., an image stored in the frame buffer or a frame buffer region) corresponding to the second rendering view port 822.

The electronic device 101 may display the region 822 of interest by the first rendering scheme and the regions 825 and 826 of no interest by a second rendering scheme (e.g., applying a visual effect or 2D rendering).

The electronic device 101 may display an image 840 for the left eye and an image 850 for the right eye. Each of the image 840 for the left eye and the image 850 for the right eye may include portions 844 and 854 (or portions of interest) corresponding to the region of interest rendered by the first rendering scheme and portions 845, 846, 855, and 856 (or portions of no interest) corresponding to the regions of no interest rendered by the second rendering scheme.

Generally, a region that is clearly seen as the user's eyes have the same vision may be referred to as a gazing region. When the user moves his head, the line of sight may be moved in the same direction. In other words, as the user turns his head to the left or right, the user usually gazes and recognizes objects that are positioned in the horizontal direction but might not recognize objects/screens positioned in an upper or lower direction. Likewise, when the user moves his head up or down, the user will first gaze and recognize objects positioned in the vertical direction but usually will not gaze or recognize objects positioned in a left or right direction.

According to an embodiment of the present disclosure, the region of interest and/or region of no interest may be formed along (or in parallel with) the direction of the motion of the electronic device or the direction of the motion of the user's line of sight.

According to an embodiment of the present disclosure, corresponding to a quick motion of a threshold or more, a 3D screen/image corresponding to the 3D application may be rendered on the region of interest, and a visual effect (e.g., applying a dark color) corresponding to the motion may be 2D-rendered on the region of no interest. When the motion speed/velocity is reduced to a threshold or less, the region of no interest may be removed, and a 3D screen/image corresponding to the 3D application may be rendered on the whole rendering region.

For example, as the amount of computation for 3D rendering is reduced by as much as the region of no interest, the screen update by the user's motion may immediately be done, providing better responsiveness to the user.

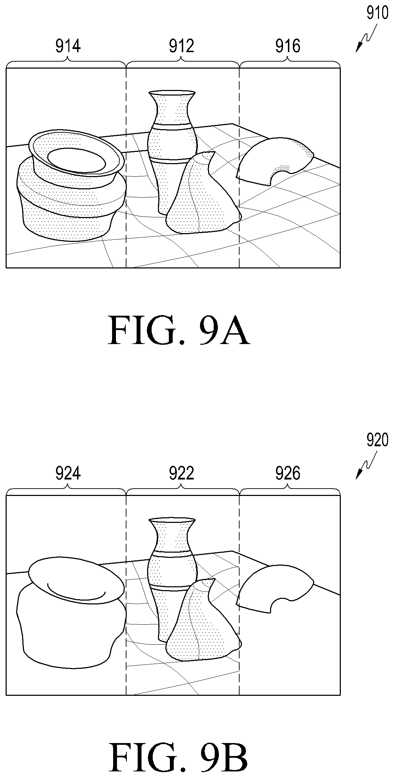

FIGs. 9A and 9B are illustrations of a method for displaying an image by an electronic device according to an embodiment of the present disclosure.

Referring to FIGs. 9A and 9B, an electronic device may identify/determine a region 912 of interest (or a gazing region) and regions 914 and 916 of no interest (or non-gazing regions) in a portion/region, a rendering view port (or a first rendering region), or a to-be-displayed region 910 (e.g., an image stored in the frame buffer or a frame buffer region) of a wide-angle image (e.g., a panorama image, 3D graphic model, or VR image) mapped to (or positioned in) a 3D space (or forming at least part of the 3D space).

The electronic device may display the region 912 of interest by the first rendering scheme (e.g., 3D rendering) and the regions 914 and 916 of no interest by a second rendering scheme (e.g., applying a visual effect or 2D rendering).

The image 920 corresponding to the to-be-displayed region 910 may include a portion 922 (or a portion of interest) corresponding to the region of interest rendered by the first rendering scheme and portions 924 and 926 (or portions of no interest) corresponding to the regions of no interest rendered by the second rendering scheme.

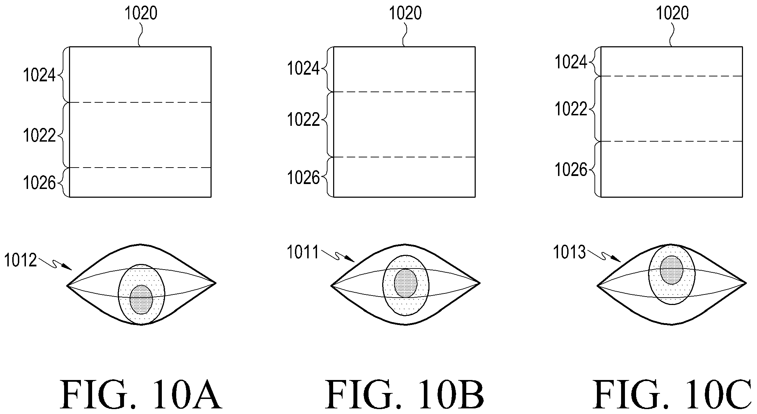

FIGs. 10A, 10B, and 10C are illustrations of a method of setting a region of interest (ROI) according to an embodiment of the present disclosure.

Referring to FIGs. 10A, 10B, and 10C, an electronic device may identify/determine, based on the direction of line of sight (or the position of an eye feature (e.g., a pupil or an iris)), a region 1022 as a region of interest (or a gazing region) and regions 1024 and 1026 as regions of no interest (or non-gazing regions) in a portion/region, a rendering view port (or a first rendering region), or a to-be-displayed region 1020 (e.g., an image stored in the frame buffer or a frame buffer region) of a wide-angle image (e.g., a panorama image, 3D graphic model, or VR image) mapped to (or positioned in) a 3D space (or forming at least part of the 3D space).

Referring to FIG. 10B, the electronic device may position the region 1022 of interest at the center of the to-be-displayed region 1020 based on the direction of the line of sight of the eye 1011 oriented to the front.

Referring to FIG. 10A, the electronic device may position the region of interest 1022 to be closer to a lower end of the to-be-displayed region 1020 than to an upper end (or move the region of interest from the center to the lower side) based on the direction of the line of sight of the eye 1012 oriented downwards.

Referring to FIG. 10C, the electronic device may position the region of interest 1022 to be closer to the upper end of the to-be-displayed region 1020 than to the lower end (or move the region of interest from the center to the upper side) based on the direction of the line of sight of the eye 1013 oriented upwards.

According to an embodiment of the present disclosure, the region of interest may be set to be elongated horizontally or vertically corresponding to the direction of the motion.

According to an embodiment of the present disclosure, the position of the start (or the position of the upper end/lower end/left end/right end) and the position of the end (e.g., the position of the lower end/upper end/right end/left end) of the region of interest may vary depending on the direction of the user's head or line of sight. For example, when the user moves his head up and left or right, the region of interest on the display may be set to be closer (or inclined) to the upper part of the whole screen (or the to-be-displayed region or rendering view port). For example, when the user's eyes move up (so that he faces the front) and he turns his head left or right, the region of interest on the display may be set to be closer to the upper part of the whole screen (or the to-be-displayed region or rendering view port).

According to an embodiment of the present disclosure, the region of interest may vary depending on the content/scene configuration/type of 3D content (or 3D content file). For example, in a case of a content where the sky is shown at the upper part and a material object, e.g., a human being, is shown at a middle or lower part on the display, the region of interest may be set to include more of the major object portion (or to be closer to the lower part). The region of interest may be pre-set per content or may also be set by analyzing information about the content.

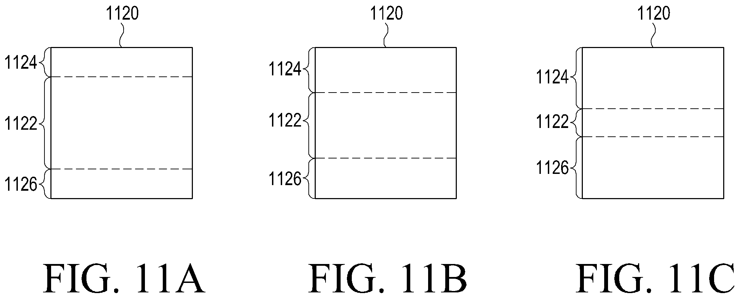

FIGs. 11A, 11B, and 11C are illustrations of a method of setting an ROI according to an embodiment of the present disclosure.

Referring to FIGs. 11A, 11B, and 11C, an electronic device may identify/determine, based on a value (e.g., a motion speed/velocity, motion distance, or motion level) related to a motion, a region 1122 as a region of interest (or a gazing region) and regions 1124 and 1126 as regions of no interest (or non-gazing regions) in a portion/region, a rendering view port (or a first rendering region), or a to-be-displayed region 1120 (e.g., an image stored in the frame buffer or a frame buffer region) of a wide-angle image (e.g., a panorama image, 3D graphic model, or VR image) mapped to (or positioned in) a 3D space (or forming at least part of the 3D space).

Referring to FIG. 11B, the electronic device may set the size/area of the region of interest 1122 to a second size/area based on a second motion velocity.

Referring to FIG. 11A, the electronic device may set the size/area of the region of interest 1122 to a first size/area that is greater than the second size/area based on a first motion velocity that is less than the second motion velocity.

Referring to FIG. 11(C), the electronic device may set the size/area of the region of interest 1122 to a third size/area that is less than the second size/area based on a third motion velocity that is greater than the second motion velocity.

According to an embodiment of the present disclosure, the electronic device may reduce the size/height/width/area of the region of interest as the motion velocity/speed increases and increase the size/height/width/area of the region of interest as the motion velocity/speed decreases. For example, when the motion velocity decreases and reaches a threshold or zero, the electronic device may set the size of the region of interest to a maximum size or the whole size of the to-be-displayed region (e.g., an image stored in the frame buffer or frame buffer region).

According to an embodiment of the present disclosure, the region of interest may be adjusted in such a manner that the 3D application (or VR application) and/or 3D graphic library controls the size of the rendering result buffer (or a frame buffer to be read in by the display) and/or the rendering view port of the virtual camera in the 3D space.

According to an embodiment of the present disclosure, the region of interest may be adjusted in such a manner that the 3D application (or VR application) and/or 3D graphic library requests the GPU (or processor) or display to render only a portion of the rendering view port or the to-be-displayed region currently set. For example, the GPU may provide a software (SW) interface (or user interface) to limit the rendering region.

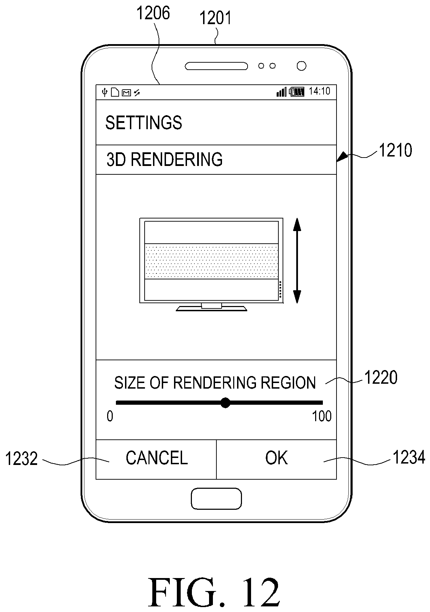

FIG. 12 is an illustration of a method of setting an ROI according to an embodiment of the present disclosure.

Referring to FIG. 12, an electronic device 1201 may display, on a display 1206, a settings screen 1210 to change the settings of 3D rendering in response to a user input. The settings screen 1210 may display information about previous settings.

The settings screen 1210 may include a menu 1220 to adjust the size of a rendering region, an OK button 1234, and a cancel button 1232.

For example, in the menu 1220, the user may select, through sliding, a size value between a lower limit of 0% and an upper limit of 100% with respect to the whole size/area of the rendering view port or to-be-displayed region.

When the user selects the OK button 1234, the electronic device 1201 may store the current changes to the settings, and when the user selects the cancel button 1232, the electronic device 1201 may maintain the previous settings.

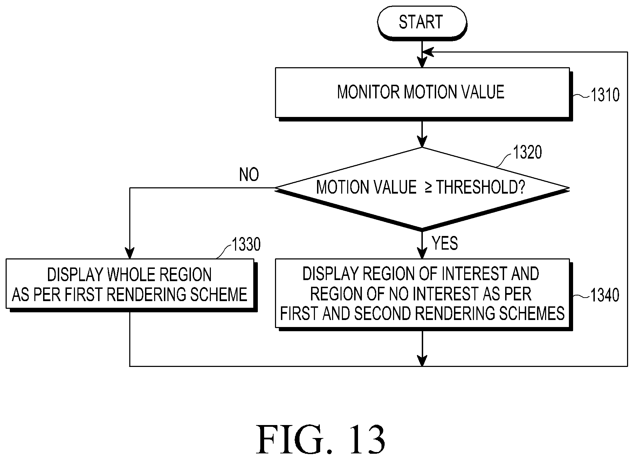

FIG. 13 is a flowchart of a method of displaying an image by an electronic device according to an embodiment of the present disclosure. The image displaying method may include steps 1310 to 1340. The image displaying method may be performed by at least one of an electronic device, a processor of the electronic device, or a controller of the electronic device.

Referring to FIG. 13, in step 1310, the electronic device may monitor a motion value (e.g., a motion speed/velocity, motion distance, motion level, angle of slope, or velocity of tilt) of the electronic device while driving a 3D application (or VR application).

According to an embodiment of the present disclosure, the electronic device may monitor a motion value (e.g., a rotation acceleration/angular velocity (pitch/yaw) variation) of the user's head or the electronic device which is sensed by a gyro sensor 240B and/or an acceleration sensor 240E.

According to an embodiment of the present disclosure, the electronic device may monitor a motion velocity/speed of the user's eyes (or eye feature) sensed by an eye tracker (e.g., biometric sensor 240I).

According to an embodiment of the present disclosure, the gyro sensor and/or the acceleration sensor and/or the eye tracker may be included in the electronic device 102. The electronic device 101 may receive values sensed by sensors of the electronic device 102 and monitor a motion value of the user's head or eyes or the electronic device.

According to an embodiment of the present disclosure, the electronic device may monitor motion/rotation information about a rendering view port (or virtual camera) included in 3D content. For example, the electronic device may monitor motion/rotation information about the rendering view port that the 3D content itself includes or intentional motion/rotation information of the 3D application (or VR application). For example, the content creator/provider may include the motion/rotation information of the rendering view port in the 3D content itself. The electronic device may previously or in realtime identify the motion/rotation information included in the content to monitor (or predict) a variation in the motion value (e.g., motion velocity). For example, the 3D application may intentionally move/turn the rendering view port. For example, the electronic device may move/turn the rendering view port within the 3D space (or virtual environment) by receiving a user input through an input/output interface (e.g., the input/output interface 150) or recognizing the user's hand gesture through a sensor module (e.g., the sensor module 240).

According to an embodiment of the present disclosure, the electronic device may monitor a motion direction of the electronic device along with the motion value while driving the 3D application.

In step 1320, the electronic device may determine whether the motion value is greater than or equal to a preset threshold.

The electronic device may perform step 1340 when the motion value is greater than or equal to the preset threshold and perform step 1330 when the motion value is less than the present threshold.

In step 1330, the electronic device may display a whole corresponding region (or an image corresponding to the rendering view port) in the 3D space by a first rendering scheme (e.g., 3D rendering).

In step 1340, the electronic device may identify/determine a region of interest (or a gazing region) and a region of no interest (or a non-gazing region). The electronic device may display a region of interest by the first rendering scheme through, e.g., a 3D application (or VR application) and/or a framework (e.g., a 3D graphic library). The electronic device may display a region of no interest by a second rendering scheme (e.g., applying a visual effect or 2D rendering).

According to an embodiment of the present disclosure, the 3D application and/or framework may identify/determine the region of interest (or a first region) and the region of no interest (or a second region) in a to-be-displayed region (e.g., an image stored in the frame buffer or a frame buffer region) corresponding to the corresponding region in the 3D space.

According to an embodiment of the present disclosure, the size and/or start position, on the frame buffer, of the region of interest may vary.

According to an embodiment of the present disclosure, the size and/or position of the region of interest may be determined depending on the motion velocity, the status of the electronic device, the direction of the user's head/line of sight, or content.

To limit 3D rendering to be performed only on the region of interest, there may be implemented a method for varying the size of a rendering view port at a level of the 3D application or a method in which the framework (e.g., a display system or 3D graphic library) requests, e.g., the GPU (or processor) to perform rendering only on a particular region. For example, the GPU may provide an SW interface and perform rendering (e.g., rasterization) only on a partial region.

According to an embodiment of the present disclosure, the electronic device may apply a preset visual effect to the region of no interest.

According to an embodiment of the present disclosure, the type of the visual effect may be determined based on the motion velocity, the status of the electronic device, the direction of the user's head/line of sight, or content. The visual effect may be at least one of applying a color, e.g., black/white/gradation, adjusting the brightness of the display (or display backlight), or drawing a preset image/video.

According to an embodiment of the present disclosure, the preset image/video may be extracted from a wide-angle image/video (e.g., a 360-degree image or 360-degree video) used in the 3D space, a texture map converted therefrom, or part of an existing scene rendered. For example, the preset image/video may be an image generated by rendering the 3D space at preset angle intervals (low resolution) (mipmap panorama image). The mipmap panorama image (or at least one mipmap panorama image according to various resolutions) may be pre-stored in the memory, along with the original 3D content (e.g., 360-degree image or 360-degree video), or may be generated and stored at the time that content is played.

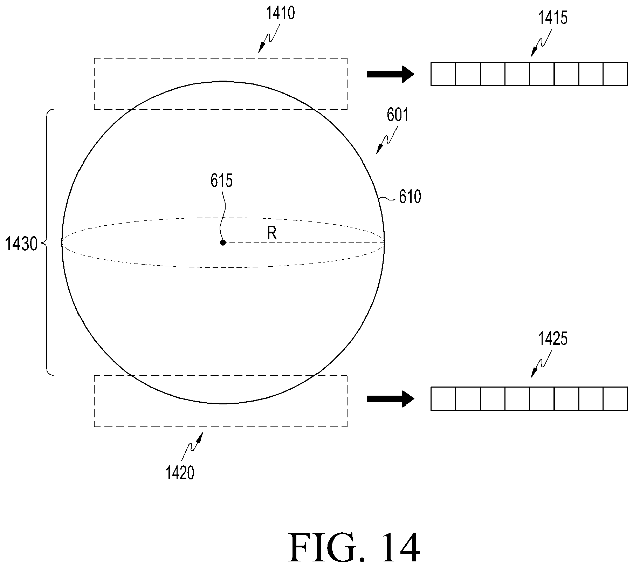

FIG. 14 is an illustration of a method of displaying an image by an electronic device according to an embodiment of the present disclosure.

Referring to FIG. 14, the electronic device may generate a first image 1415 (or a mipmap panorama image) for a region of no interest by low-resolution-rendering an upper portion 1410 of a 3D space 601 where a user's view point is positioned inside (e.g., at the starting point 615 of) a 3D model 610 (e.g., a sphere with a preset radius R, a cube, or a cylinder) along a plurality of directions (e.g., eight directions).

The electronic device may generate a second image 1425 (or a mipmap panorama image) for a region of no interest by low-resolution-rendering a lower portion 1420 of the 3D space 601 along a plurality of directions (e.g., eight directions).

For example, the electronic device may display/render an image extracted from a central portion 1430 of the 3D space 601 on a region of interest and display/render images extracted from the first image 1415 and the second image 1425 on the regions of no interest.

According to an embodiment of the present disclosure, the electronic device may determine, e.g., the size of the region of interest, the type of a visual effect to be applied to the region of no interest, or the quality of rendering based on a motion-related value.

According to an embodiment of the present disclosure, the electronic device may vary, e.g., the size of the region of interest, the type of a visual effect to be applied to the region of no interest, or the quality of rendering based on a variation in the motion-related value.

According to an embodiment of the present disclosure, the electronic device may set the size of the region of interest and/or the region of no interest to correspond to the motion-related value (e.g., a motion speed/velocity, motion distance, angle of slope, speed/velocity of a tilt). For example, the electronic device may set the region of no interest to be larger (e.g., to occupy 40% of the whole rendering range (or rendering view port or to-be-displayed region (e.g., an image stored in the frame buffer or a frame buffer region) as the motion speed/velocity increases, and the electronic device may set the region of no interest to be smaller (e.g., to occupy 10% of the whole rendering range) as the motion speed/velocity decreases. The electronic device may in real-time vary the size of the region of interest and/or the region of no interest according to the motion-related value.

According to an embodiment of the present disclosure, the electronic device may set/vary the type of a visual effect to be applied to the region of no interest to correspond to the motion-related value. For example, when the motion speed/velocity is high, the electronic device may set the visual effect of the region of no interest to a fill-up in a mono color (e.g., black) or adjustment of brightness of the display (e.g., an LED display may be subject to brightness control per region). For example, when the motion speed/velocity is low, the electronic device may set the visual effect of the region of no interest to, e.g., application of an animation (e.g., a mipmap panorama image/animation according to the motion speed/velocity)/application of a video.

According to an embodiment of the present disclosure, the electronic device may set/vary the size of the region of no interest and/or the type of the visual effect to correspond to a rendering time of a 3D application. For example, when the average time of rendering one scene by the 3D application is 10ms, the size of the region of no interest may be set to be up to 40% of the whole rendering range. When the average rendering time is 5ms, the size of the region of no interest may be set to 10% of the whole rendering range. The rendering time of the 3D application may be measured during a runtime after the 3D application is executed.

According to an embodiment of the present disclosure, the electronic device may adjust the type of the visual effect and/or the size/range of the region of interest to correspond to the memory status (e.g., available memory (or free memory)). For example, when the available memory of the electronic device is insufficient at the time that the 3D application is executed, the type of the visual effect may be set to a fill-up in a mono color or the adjustment of brightness, and the region of interest to be rendered may be set to be narrower. When the available memory is sufficient, the type of the visual effect may be set in a mipmap scheme, and the region of interest to be rendered may be set to be broader.

According to an embodiment of the present disclosure, the electronic device may provide the user with a user interface by which the size (e.g., the maximum size) of the region of no interest and the type of the visual effect may be set.

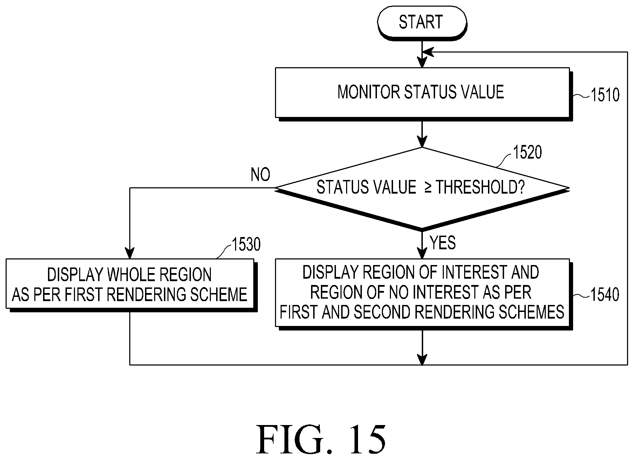

FIG. 15 is a flowchart of a method of displaying an image by an electronic device according to an embodiment of the present disclosure. The image displaying method may include steps 1510 to 1540. The image displaying method may be performed by at least one of an electronic device, a processor of the electronic device, or a controller of the electronic device.

Referring to FIG. 15, in step 1510, the electronic device may monitor a status value of the electronic device while driving a 3D application (or VR application).

The status value of the electronic device may be a value indicating at least one of a battery status, a wireless signal reception status, a memory status, an available resource status (e.g., a processor use status), an internal/processor temperature, or a maximum frequency of the processor (e.g., a CPU or GPU).

In step 1520, the electronic device may determine whether the motion value is greater than or equal to a preset threshold.

The electronic device may perform step 1540 when the motion value is greater than or equal to the preset threshold and perform step 1530 when the motion value is less than the present threshold.

In step 1530, the electronic device may display a whole region (or an image corresponding to the rendering view port) in the 3D space by a first rendering scheme (e.g., 3D rendering).

In step 1540, the electronic device may identify/determine a region of interest (or a gazing region) and a region of no interest (or a non-gazing region). The electronic device may display a region of interest by the first rendering scheme through, e.g., a 3D application (or VR application) and/or framework (e.g., a 3D graphic library). The electronic device may display a region of no interest by a second rendering scheme (e.g., applying a visual effect or 2D rendering).

According to an embodiment of the present disclosure, the 3D application and/or framework may identify/determine the region of interest (or a first region) and the region of no interest (or a second region) in a to-be-displayed region (e.g., an image stored in the frame buffer or a frame buffer region) corresponding to the corresponding region in the 3D space.

According to an embodiment of the present disclosure, the electronic device may apply a visual effect according to the battery level/remaining battery time. When the remaining battery time is more than 30%, no visual effect may apply. When the remaining battery time is from 10% to 30%, the region of no interest may be set to be 20% of the whole rendering range (or rendering view port or to-be-displayed region (e.g., an image stored in the frame buffer or a frame buffer region)). When the remaining battery time is less than 10%, the region of no interest may be set to be about 40% of the whole rendering range. The user may feel as if the view angle narrows according to the the remaining battery time.

According to an embodiment of the present disclosure, the electronic device may apply (or turn on/off) a visual effect according to the amount of heat generated by the electronic device. The electronic device may adjust the range/size of the region of interest and the type of the visual effect according to the amount of heat generated by the electronic device. The electronic device may likewise apply (or turn on/off) the visual effect corresponding to the maximum frequency of the processor (e.g., a CPU or GPU) and may adjust the type of the visual effect and the range/size of the region of interest.

According to an embodiment of the present disclosure, the electronic device may apply (or turn on/off) the visual effect to correspond to the memory status (e.g., an available memory (or free memory)) and may adjust the range/size of the region of interest and the type of the visual effect. For example, when the available memory of the electronic device is insufficient at the time that a 3D application is executed, the visual effect may apply. In addition, when applying the visual effect, the type of the visual effect may be set to a fill-up in a mono color or the adjustment of brightness according to the amount of the available memory, and the region of interest to be rendered may be set to be narrower. In other words, the status of heating/battery consumption of the electronic device may be controlled by adjusting the amount of rendering.

As used herein, the term "module" includes a unit configured in hardware, software, or firmware and may interchangeably be used with other terms, e.g., "logic," "logic block," "part," or "circuit." The term "module" may indicate a single integral part or a minimum unit or part of performing one or more functions. The term "module" may indicate a device that may be implemented mechanically or electronically and may include, e.g., an application-specific integrated circuit (ASIC), field-programmable gate arrays (FPGAs), or a programmable logic device, that is known or will be developed in the future as performing some operations.

According to an embodiment of the present disclosure, at least a part of the device (e.g., modules or their functions) or method (e.g., operations) may be implemented as instructions stored in a non-transitory computer-readable storage medium (e.g., the memory 130), e.g., in the form of a program module. The instructions, when executed by a processor (e.g., the processor 120), may enable the processor to carry out a corresponding function. The non-transitory computer-readable storage medium may include, e.g., a hard disk, a floppy disc, a magnetic medium (e.g., magnetic tape), an optical recording medium (e.g., a compact disc ROM (CD-ROM), DVD, magnetic-optical medium (e.g., floptical disk), or an embedded memory. The instruction may include code created by a compiler or code executable by an interpreter.

Modules or programming modules in accordance with various embodiments of the present disclosure may include at least one or more of the aforementioned components, omit some of them, or further include other additional components. Operations performed by modules, programming modules or other components in accordance with various embodiments of the present disclosure may be carried out sequentially, in parallel, repeatedly or heuristically, or at least some operations may be executed in a different order or omitted or other operations may be added.

According to an embodiment of the present disclosure, there is provided a storage medium storing commands configured to be executed by at least one processor to enable the at least one processor to perform at least one operation, the at least one operation comprising displaying a first region of a 3D space according to a first rendering scheme, when a preset condition is met, determining a region of interest and a region of no interest, and displaying the region of interest according to the first rendering scheme and the region of no interest according to a second rendering scheme.

As is apparent from the forgoing description, according to an embodiment of the present disclosure, there may be provided a method for updating an image according to the motion of a user's head and/or eyes.

The user may experience poorer responsiveness if a rendering delay occurs when the screen changes more frequently. According to an embodiment of the present disclosure, when an HMD user involves a quick head motion (a turn), a material (or gazing) region or ROI of the user's line of sight may be first rendered to provide a delay-free, immediate screen update to the user. This may prevent motion sickness.

According to an embodiment of the present disclosure, differentiated rendering schemes may be provided to immaterial regions (or non-gazing region or region of no interest).

Generally, data in a frame buffer may be transmitted (flipped) to be suited for a display update period (e.g., vertical synchronization (VSYNC) period--16.6ms for 60Hz). When a 3D application fails to complete image rendering within one period of display update, display output is delayed to a next period or a frame drop may occur. For example, when a 3D application finishes image rendering within 20ms in a display system operating at the period of 16.6ms, the whole display operation is further delayed by one period. According to an embodiment of the present disclosure, abstaining from rendering by 10% for the upper and lower part of the screen may enable immediate rendering with no delay or frame drop.

While the present disclosure has been shown and described with reference to certain embodiments thereof, it will be understood by those skilled in the art that various changes in form and details may be made therein without departing from the scope of the disclosure as defined by the appended claims and their equivalents.

## Claims

1. An electronic device, comprising:
a display; and
a processor connected to the display, the processor configured to display a first region of a three-dimensional (3D) space according to a first rendering scheme, when a preset condition is met, determine a region of interest and a region of no interest, display the region of interest on the display according to the first rendering scheme and display the region of no interest on the display according to a second rendering scheme.

2. The electronic device of claim 1, wherein the 3D space is a virtual space surrounding a user by 360 degrees, and wherein the first region corresponds to at least a portion of a surface that limits the 3D space.

3. The electronic device of claim 1, wherein the processor is further configured to determine a size of the region of interest based on information about a motion of the electronic device or a motion of a user's line of sight.

4. The electronic device of claim 1, wherein portions of the region of no interest are positioned at both sides of the region of interest.

5. The electronic device of claim 1, wherein the processor is further configured to compare a value related to a motion of the electronic device or a value related to a motion of a user's line of sight with a preset threshold, and when the value related to the motion of the electronic device or the value related to the motion of the user's line of sight is greater than or equal to the preset threshold, determine the region of interest and the region of no interest.

6. The electronic device of claim 1, wherein the first rendering scheme includes a preset 3D rendering scheme, and the second rendering scheme includes a scheme of applying a preset visual effect.

7. The electronic device of claim 1, wherein the processor is further configured to, when the preset condition is not met, display a second region of the 3D space on the display according to the first rendering scheme.

8. The electronic device of claim 1, wherein the processor is further configured to determine a type of a visual effect to be applied to the region of no interest based on information about a motion of the electronic device or a motion of a user's line of sight, and wherein the visual effect to be applied to the region of no interest includes at least one of a fill-up in a mono color, adjustment of brightness, or display of a preset image.

9. A method of displaying an image by an electronic device, the method comprising:
displaying, on a display, a first region of a three-dimensional (3D) space according to a first rendering scheme;
when a preset condition is met, determining, by a processor, a region of interest and a region of no interest; and
displaying, on the display, the region of interest according to the first rendering scheme; and
displaying, on the display, the region of no interest according to a second rendering scheme.

10. The method of claim 9, further comprising determining a size of the region of interest based on information about a motion of the electronic device or a motion of a user's line of sight.

11. The method of claim 9, wherein determining the region of interest and the region of no interest comprises comparing a value related to a motion of the electronic device or a value related to a motion of a user's line of sight with a preset threshold, and when the value related to the motion of the electronic device or the value related to the motion of the user's line of sight is greater than or equal to the preset threshold, determining the region of interest and the region of no interest.

12. The method of claim 9, wherein the first rendering scheme includes a preset 3D rendering scheme, and the second rendering scheme includes a scheme of applying a preset visual effect.

13. The method of claim 9, further comprising, when the preset condition is not met, displaying a second region of the 3D space according to the first rendering scheme.

14. The method of claim 9, further comprising determining a type of a visual effect to be applied to the region of no interest based on information about a motion of the electronic device or a motion of a user's line of sight.

15. The method of claim 9, wherein portions of the region of no interest are positioned at both sides of the region of interest.
